# FASCICULE DE BREVET EUROPEEN

(11) **EP 2 742 320 B1**
(45) Date de publication et mention de la délivrance du brevet: **15.11.2017**
(21) Numéro de dépôt: 12758554.5
(22) Date de dépôt: 08.08.2012
(51) Int. Cl.: G06T 7/62, G01J 1/42, G01J 1/08, G01B 11/12

(54) **PROCEDE ET APPAREIL OPTOELECTRONIQUE POUR MESURER LE DIAMETRE INTERNE D'UN CORPS CREUX**
OPTOELEKTRONISCHES VERFAHREN UND VORRICHTUNG ZUR MESSUNG DES INNENDURCHMESSERS EINES HOHLKÖRPERS
OPTOELECTRONIC METHOD AND DEVICE FOR MEASURING THE INNER DIAMETER OF A HOLLOW BODY

(30) Priorité: 08.08.2011 FR 1157244
(43) Date de publication de la demande: 18.06.2014
(73) Titulaire: Tiama, 69390 Vourles (FR)
(72) Inventeur: LECONTE, Marc, 69700 Loire sur Rhone (FR)
(74) Mandataire: Thibault, Jean-Marc
(86) Numéro de dépôt international: PCT/FR2012/051865
(87) Numéro de publication internationale: WO 2013/021137

(56) Documents cités:
- JP-A- 11 132 730
- JP-A- 57 142 505
- US-A1- 2008 198 389

## Description

La présente invention concerne le domaine technique de l'inspection optoélectronique d'objets creux ou récipients au sens général, à caractère transparent ou translucide, tels que par exemple des bouteilles, des pots ou des flacons en verre, en vue de contrôler ou d'évaluer des caractéristiques dimensionnelles présentées par un tel objet creux.

L'objet de l'invention trouve une application particulièrement avantageuse mais non exclusivement pour mesurer le diamètre interne d'un corps creux et en particulier le diamètre interne du col d'une bouteille.

Dans ce domaine d'application, il apparaît le besoin de mesurer le diamètre interne d'un objet creux afin de déterminer si cet objet creux respecte des critères dimensionnels. Par exemple, dans le domaine des bouteilles en verre, le diamètre interne du col des bouteilles doit être mesuré afin de savoir si cette portion de la bouteille respecte les critères pour assurer un bouchage et un débouchage correct de la bouteille par le bouchon inséré ultérieurement dans le col des bouteilles.

Pour mesurer le diamètre interne du col d'un récipient, différentes techniques sont connues. Par exemple, il est connu de placer une source lumineuse diffuse sous le fond d'un récipient et au-dessus du col du récipient, une caméra munie d'un objectif télécentrique permettant d'observer le col suivant son axe de révolution. Il apparaît ainsi possible de former une image du col du récipient dans laquelle apparaît en son centre, un disque clair matérialisant la plus petite section de passage du col. Cette technique d'inspection permet ainsi de mesurer le plus petit diamètre du col du récipient quel que soit sa position le long du col du récipient. Aussi, cette technique ne permet pas de mesurer le diamètre interne du col à une hauteur déterminée le long de son axe vertical de révolution, ce qui limite le contrôle dimensionnel des récipients. En effet, il apparaît le besoin, pour contrôler de manière complète les conditions de bouchage et de débouchage du récipient, de pouvoir mesurer le diamètre interne du col selon au moins une section déterminée du col différente de celle correspondant au plus petit diamètre.

Il est également connu par la demande de brevet US 2008/0198389 un appareil permettant de mesurer les diamètres interne et externe d'un tube transparent. Cet appareil comporte un faisceau laser collimaté pour éclairer le tube transparent selon une ligne lumineuse inclinée par rapport à un plan perpendiculaire à l'axe longitudinal du tube. La lumière interceptée et réfractée par le tube transparent est récupérée par une caméra via un écran interposé entre le tube et la caméra. L'analyse de la forme du faisceau lumineux récupéré permet de déterminer le diamètre interne le long du tube transparent.

Un tel appareil ne permet pas de mesurer directement le diamètre interne d'un corps creux selon différentes sections du corps creux. En effet, dans une image, seul le diamètre à hauteur de la source lumineuse en forme de ligne peut être mesuré. Il est donc nécessaire de créer un déplacement relatif du tube et du capteur dans la direction parallèle à l'axe central du tube pour parvenir à réaliser d'autres mesures dans d'autres sections transversales, ledit mouvement s'ajoutant à la rotation de l'objet autour de son axe.

Les demandes de brevet JP 57 142505 et JP 11 132730 décrivent également un procédé de mesure du diamètre interne d'un tube à l'aide d'un faisceau lumineux traversant le tube et récupéré par un circuit électronique de détection. De telles méthodes ne permettent pas de détecter avec précision le diamètre interne d'un corps creux. Ces méthodes nécessitent un balayage par une source de lumière collimatée finement de type laser. L'objet doit être immobilisé en supprimant au moins le degré de liberté dans ladite direction transversale au moins durant le balayage complet de toute la section transversale, ce qui n'est pas adapté à des contrôles industriels rapides et sur des objets lourds et imparfaits. De plus, la mesure de plusieurs diamètres de la même section nécessite la rotation de l'article autour de son axe, et une rotation par incréments avec arrêt entre chaque incrément prend une durée importante d'analyse. De surcroit, si l'on veut en plus mesurer les diamètres à plusieurs sections transversales, le temps de mesure devient totalement prohibitif, ou alors de fortes erreurs sont dues aux déplacements de l'objet durant la mesure.

L'objet de l'invention vise donc à remédier aux inconvénients de l'état de la technique en proposant une technique simple de mise en oeuvre permettant de mesurer rapidement, en environnement industriel et avec une grande précision, au moins le (ou les) diamètre(s) interne(s) d'un corps creux à n'importe quelle hauteur le long de l'axe de révolution de ce corps creux. L'objet de l'invention est réalisé par un procédé tel que défini dans la revendication indépendante 1 et un dispositif tel que défini dans la revendication indépendante 8. Les modes particuliers de réalisation de l'invention sont définis dans les revendications dépendantes 2 à 7 et 9 à 15. Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en élévation montrant un exemple de réalisation d'un appareil de mesure du diamètre interne d'un corps creux.
La **Figure 2** est une vue de dessus de l'appareil de mesure illustré à la **Fig. 1****.**
La **Figure 3** est un exemple d'une image prise d'un corps creux permettant la mesure du diamètre interne.

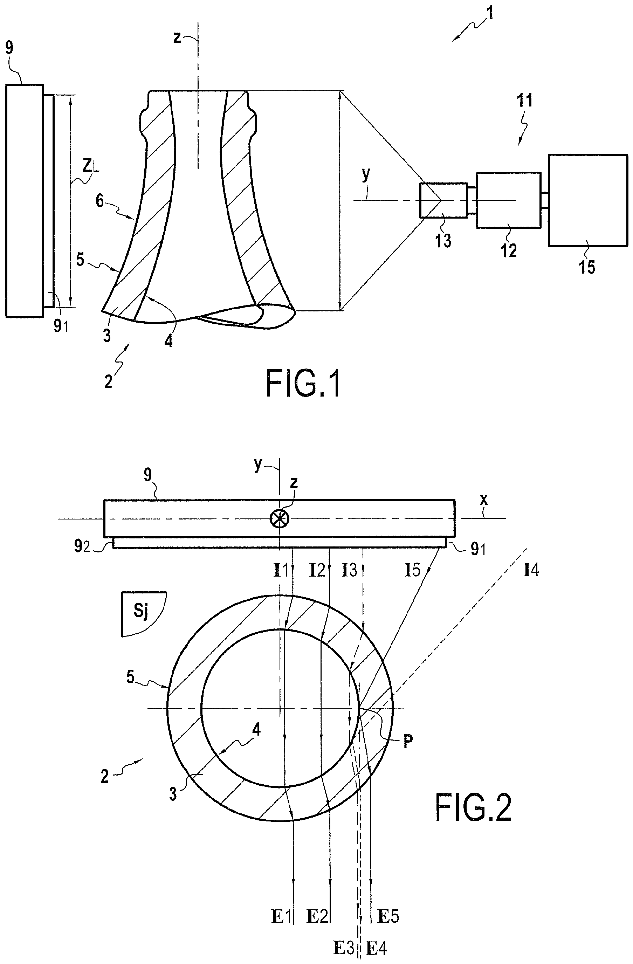

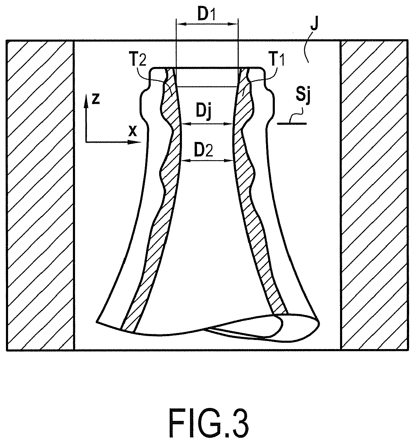

Tel que cela ressort plus précisément des **Fig. 1** et **2**, l'objet de l'invention concerne un appareil **1** pour mesurer le diamètre interne d'un corps creux **2** transparent ou translucide. Dans l'exemple illustré, le corps creux **2** est un récipient présentant un axe de révolution selon l'axe vertical **z.** Le corps creux **2** comporte ainsi une paroi **3** délimitée par une face interne **4** et une face externe **5.** Dans l'exemple préféré illustré d'un objet creux **2** tel qu'une bouteille, le corps creux **2** présente un col **6** au niveau duquel est à mesurer au moins un diamètre interne **Dj** du corps creux **2.** Le diamètre interne du corps creux **2** est pris entre deux points de la face interne **4**, situés de part et d'autre de l'axe vertical **z.** Ainsi, le diamètre interne est mesuré selon un axe de mesure **x** perpendiculaire à l'axe vertical **z (****Fig. 3****).**

L'appareil **1** comporte également une source lumineuse **9** présentant un caractère diffus et étendu et émettant des rayons lumineux incidents **Ii** comme illustré à la **Fig. 2****.** Le caractère diffus de la source lumineuse **9** est à prendre dans le sens commun en optique, à savoir que chaque point de la source lumineuse **9** émet de la lumière dans une multitude de directions. Une surface émettrice de type Lambertien est un modèle parfait de ce type de source, mais bien entendu la gamme d'angles émis par la source peut être restreinte et les lobes d'émission ne sont pas strictement hémisphériques. La source lumineuse **9** est disposée selon un côté de l'objet **2** afin qu'un rayon lumineux incident **Ii** traverse le corps creux **2** selon au moins une section transversale **Sj** perpendiculaire à l'axe vertical **z** et dans laquelle le diamètre interne **Dj** est mesuré selon l'axe de mesure **x.**

L'appareil **1** comporte également un système de récupération **11** selon un axe optique **y** perpendiculaire à l'axe vertical **z** et perpendiculaire à l'axe de mesure **x**, des rayons lumineux émergents **Eᵢ** réfléchis et réfractés par le corps creux **2** depuis le côté opposé de celui illuminé par la source lumineuse **9.** Tel que cela ressort clairement des **Figures 1** et **2**, la source lumineuse **9** et le système de récupération **11** sont disposés ainsi de part et d'autre du corps creux **2.**

Le système de récupération des faisceaux **11** comporte par exemple une caméra **12** munie d'un objectif **13** permettant la formation d'images. La caméra **12** est reliée à une unité d'acquisition et de traitement **15** des images, adaptée pour analyser le signal vidéo délivré par la caméra en vue de mesurer notamment le diamètre interne du corps creux sur les images prises.

Selon une variante préférée de réalisation, la caméra **12** est munie d'un objectif télécentrique **13** de manière que les rayons lumineux émergents **Eᵢ** collectés soient parallèles à l'axe optique **y** du système de récupération **11.**

Selon une variante avantageuse de réalisation, la zone d'inspection de la caméra **12** s'étend sur une hauteur déterminée selon l'axe vertical **z** du corps creux dans laquelle il est possible de déterminer le diamètre interne selon différents niveaux pris perpendiculairement à l'axe vertical **z.** A cet effet, la source lumineuse **9** possède selon l'axe vertical **z**, une hauteur **Z_{L}**. Selon cette variante de réalisation, la source lumière est étendue d'une part selon l'axe de mesure x pour présenter les deux frontières lumineuses **9₁**, **9₂** et d'autre part selon l'axe vertical **z,** avec une hauteur **Z_{L}**.

Conformément à l'invention, la source lumineuse **9** présente une première et une deuxième frontières lumineuses **9₁, 9₂** s'étendant verticalement c'est-à-dire, dans l'exemple illustré, selon une direction rectiligne parallèle à l'axe vertical **z.** Ces deux frontières lumineuses **9₁, 9₂** sont distantes l'une de l'autre selon l'axe de mesure **x.** Dans l'exemple illustré aux **Fig. 1** et **2**, ces deux frontières lumineuses **9₁, 9₂** correspondent aux bords verticaux de la source lumineuse **9.** Selon cette variante, la source **9** est lumineuse de son centre jusqu'à ses deux bords verticaux **9₁, 9₂**. En d'autres termes, la source lumineuse **9** n'émet pas de lumière au-delà des bords verticaux **9₁, 9₂** de sorte que ces bords constituent des frontières lumineuses. En d'autres termes, chaque frontière lumineuse **9₁**, **9₂** correspond à la zone de jonction sur l'axe de mesure **x**, d'une zone émettant de la lumière et d'une zone n'émettant pas de lumière.

La source lumineuse **9** présente une première et deuxième frontières lumineuses **9₁** et **9₂** de manière à créer dans l'image formée par la caméra **12**, respectivement une première et une deuxième transitions lumineuses **T₁**, **T₂** distantes l'une de l'autre et diamétralement opposées par rapport à l'axe vertical **z**, et correspondant aux rayons lumineux émergents dont le prolongement est tangent à la face interne **4** et perpendiculaire au diamètre du corps creux. En considération de la notion de frontières lumineuses **9₁, 9₂,** une transition lumineuse **T₁,T₂** observable dans une image **J** correspond à un différentiel de niveau de gris, comme par exemple, le passage d'une zone claire à une zone sombre ou inversement.

La caméra **12** récupère ainsi les rayons lumineux émergents **Eᵢ** réfléchis et réfractés par l'objet creux **2** depuis le côté opposé de celui illuminé par la source lumineuse **9.** Le système de récupération **11** forme ainsi au moins une image **J** (**Fig. 3**) dans laquelle apparaissent au moins les deux transitions lumineuses **T₁** et **T₂** distantes l'une de l'autre et diamétralement opposées par rapport à l'axe vertical **z.**

Tel que cela ressort plus précisément à la **Fig. 3**, l'image **J** obtenue est traitée par l'unité d'acquisition et de traitement **15** afin de déterminer la distance selon l'axe de mesure **x**, entre les deux transitions lumineuses **T₁**, **T₂** en vue de déterminer la mesure du diamètre interne **Dⱼ** du corps creux **2.**

Selon une caractéristique de l'invention, les frontières lumineuses **9₁, 9₂** sont strictement comprises selon l'axe de mesure **x** entre la position d'un rayon lumineux incident limite interne **I₃** et la position d'un rayon lumineux incident limite externe **I₄** (**Fig. 2**). Les positions des rayons lumineux incidents limites sont définies de la manière suivante.

La source lumineuse **9** est telle que les deux frontières lumineuses **9₁, 9₂** sont prises de part et d'autre de l'axe optique **y** du système de récupération **11.** Pour des raisons de simplification, la suite de la description visera à décrire uniquement la position de la première frontière lumineuse **9₁.** Ainsi, il est à noter que seuls quelques rayons lumineux incidents **I₁, I₂**, **I₃, I₅** situés entre l'axe optique y et la première frontière lumineuse **9₁** de la source **9** ont été représentés à la **Fig. 2****.** Bien entendu, le cheminement des rayons lumineux de la source **9** est symétrique de part et d'autre de l'axe optique **y** de sorte que la définition de la position de la deuxième frontière lumineuse **9₂** est identique à celle correspondant à la première frontière **9₁.**

Il doit être considéré que les rayons lumineux incidents **I₁** et **I₂** sont uniquement réfractés à la traversée du corps creux **2** de sorte que les rayons lumineux émergents **E₁, E₂** correspondants sont captés par la caméra **12** de sorte que sur l'image apparaît une zone claire (**Fig. 3**).

Le rayon lumineux incident **I₃** traverse le corps creux **2** en étant uniquement réfracté à la traversée du corps **2.** A cet effet, le rayon lumineux émergent **E₃** correspond au rayon lumineux le plus éloigné de l'axe optique **y** collecté par la caméra **12** qui est uniquement réfracté à la traversée du corps creux **2.** Le rayon lumineux émergent **E₃** est tel que son prolongement est tangent à la face interne **4** et perpendiculaire au diamètre. Tel que cela apparaît plus précisément à la **Fig. 2**, le prolongement du rayon lumineux émergent **E₃** est tangent à la face interne **4** en un point **P.** Il doit être considéré que le rayon lumineux incident **I₃** est le rayon lumineux incident limite dit interne pour lequel une zone claire apparaît sur l'image **J.** Le rayon lumineux incident limite interne **I₃** engendre le rayon lumineux émergent **E₃** uniquement réfracté lors de la traversée du corps creux **2** et situé le plus loin de l'axe optique **y.** En d'autres termes, le rayon lumineux incident limite interne **I₃** correspond à la transition entre la réfraction et la réflexion des rayons lumineux émergents conduisant à la création de la transition lumineuse **T₁** dans l'image **J**.

La **Fig. 2** illustre un rayon lumineux incident **I₄** qui est plus éloigné de l'axe optique **y** par rapport au rayon lumineux incident **I₃.** Le rayon lumineux incident **I₄** pénètre dans la paroi du corps creux **2** en étant réfléchi sur sa face interne **4** puis réfracté à sa sortie sur la face externe **5** pour donner lieu à un rayon lumineux émergent **E₄.** Il est à noter que la direction du rayon lumineux émergent **E₄** est tangente à la face interne **4** du corps creux au point **P.** En d'autres termes, les rayons lumineux émergents **E₃** et **E₄** sont confondus avec leur direction tangente en un même point **P** de la face interne **4** du corps creux **2.**

Il doit donc être considéré que le rayon lumineux émergent **E₄** est le rayon lumineux émergent le plus proche de l'axe optique **y** collecté par la caméra **12** et qui a subi une réflexion sur la face interne **4** lors de la traversée du corps creux **2.** Aussi, si la source lumineuse **9** émet le rayon lumineux incident **I₄,** il occulterait la transition lumineuse **T₁** dans l'image **J**. Pour éviter ce phénomène, la frontière lumineuse **9₁** est telle que la source lumineuse **9** ne génère pas le rayon lumineux incident **I₄.** Le rayon lumineux incident **I₄** est donc le rayon lumineux incident limite externe pour le positionnement de la frontière lumineuse **9₁.** Le rayon lumineux incident limite externe **I₄** correspond au rayon lumineux qui engendre le rayon lumineux émergent réfléchi par la face interne **4** du corps creux, qui est le plus proche de l'axe optique **y.**

En d'autres termes, la première frontière lumineuse **9₁** doit être située par rapport à l'axe optique **y** en retrait par rapport au rayon lumineux incident limite externe **I₄**. Dans ces conditions, il apparaît une zone sombre dans l'image **J** correspondant à la transition lumineuse **T₁.** Il doit être considéré que plus la première frontière lumineuse **9₁** se rapproche du rayon lumineux incident limite externe **I₄,** plus la largeur de la zone sombre ou transition lumineuse **T₁** diminue. A titre d'illustration à la **Fig. 2**, un rayon lumineux incident **I₅** a été représenté à proximité de la première frontière lumineux **9₁.** Ce rayon lumineux incident **I₅** qui est situé entre les rayons lumineux incidents **I₃, I₄,** engendre un rayon lumineux émergent **E₅** qui est plus éloigné de l'axe optique **y** que les rayons lumineux émergents **E₃**, **E₄**. A l'inverse, plus la première frontière lumineuse **9₁** s'éloigne du rayon lumineux limite externe **I₄,** c'est-à-dire se rapproche du rayon lumineux incident limite interne **I₃,** plus la largeur de la zone sombre ou transition lumineuse **T₁** augmente.

En résumé, la frontière lumineuse **9₁** doit être comprise selon l'axe de mesure **x**, entre les rayons lumineux incidents limites interne **I₃** et externe **I₄,** mais strictement entre ces deux rayons c'est-à-dire en dehors de ces deux rayons. La position de la deuxième frontière lumineuse **9₂** est définie de manière analogue à la première frontière lumineuse **9₁.**

Ainsi, les frontières lumineuses **9₁, 9₂** prises de part et d'autre de l'axe optique **y** sont strictement comprises selon l'axe de mesure **x** entre les rayons lumineux incidents limites interne **I₃** et externe **I₄.**

Il apparaît ainsi une parfaite correspondance entre la position de la première transition lumineuse **T₁** (ou le bord interne de l'ombre) et la position de la face interne **4** du corps creux. Bien entendu, il apparaît de manière similaire, une parfaite correspondance entre la position de la deuxième transition lumineuse **T₂** (ou le bord de l'ombre) et la position de la face interne **4.**

Il ressort de la description qui précède que la distance selon l'axe de mesure **x** entre les deux transitions lumineuses **T₁** et **T₂** permet de déterminer la mesure du diamètre interne du corps creux selon au moins une section du corps **2.**

Selon une variante préférée de réalisation dans laquelle la source lumineuse présente une hauteur déterminée **Z_{L}** selon l'axe vertical **z**, il apparaît possible de récupérer les rayons lumineux émergents réfléchis et réfractés afin de former une image du corps creux **2** selon une hauteur permettant ainsi de déterminer à différents niveaux de l'axe vertical **z**, la distance entre deux transitions lumineuses selon l'axe de mesure **x** afin de déterminer les mesures du diamètre interne (**D₁, D₂,** ... **Dj**) à différentes hauteurs du corps creux **2** (**Fig. 3**).

Selon une caractéristique avantageuse de réalisation, le procédé selon l'invention consiste à faire tourner le corps creux **2** autour de lui-même selon l'axe de révolution **z**, selon au moins un demi-tour. A cet effet, le corps creux **2** est entrainé en rotation par tout moyen approprié pour assurer sa rotation autour de l'axe de révolution **z.**

Le procédé consiste à traiter les images acquises pour différentes positions angulaires de rotation de l'objet creux **2** dans chacune desquelles la mesure du diamètre interne peut être réalisée selon une ou plusieurs hauteurs.

Dans la mesure où le diamètre interne est mesuré à différentes hauteurs du corps creux **2**, le procédé selon l'invention permet aussi de déterminer le profil de la face interne **4.**

Les mesures du diamètre interne sont comparées à des valeurs de référence afin de déterminer si le corps creux est défectueux ou non. Dans le cas où le profil de la face interne est déterminé, il peut être envisagé de comparer le profil interne mesuré de la face interne **4** avec un profil de référence en vue de déterminer si le corps creux est défectueux ou non.

Dans l'exemple de réalisation illustré sur les dessins, la source **9** est lumineuse de son centre jusqu'à ses frontières lumineuses verticales **9₁, 9₂**.

Il est à noter qu'il peut être prévu d'illuminer l'objet creux par une source lumineuse **9** s'étendant depuis les deux frontières lumineuses **9₁, 9₂** prises de part et d'autre de l'axe **z** au-delà des rayons lumineux incidents limites externe **I₄.** La mise en oeuvre d'une telle source lumineuse permet d'obtenir une image en niveau de gris inversé par rapport à l'image **J** obtenue selon la source lumineuse illustrée sur les **Fig. 1** et **2****.**

Dans l'exemple illustré, les frontières lumineuses **9₁,9₂** s'étendent selon une direction rectiligne parallèle à l'axe vertical **z.** Bien entendu, la source lumineuse **9** peut présenter des frontières lumineuses non rectilignes. Avantageusement, les frontières lumineuses **9₁**,**9₂**, possèdent un profil ou un contour qui est adapté au profil du diamètre interne du corps creux **2.**

Selon une caractéristique avantageuse de réalisation, la source lumineuse **9** comporte un système de réglage permettant de faire varier la distance selon l'axe de mesure **x** entre les frontières lumineuses **9₁**,**9₂**. Un tel système de réglage permet de s'adapter à la taille de l'objet creux **2** à inspecter. En tant que système de réglage, il peut être prévu d'utiliser plusieurs masques pour la source lumineuse **9**, ou une source lumineuse **9** réalisée par une série de diodes électroluminescentes pilotées en allumage et extinction.

L'invention n'est pas limitée aux exemples décrits et représentés car diverses modifications peuvent y être apportées sans sortir de son cadre tel que revendiqué par les revendications 1 à 15.

## Revendications

1. - Procédé de mesure du diamètre interne d'un corps creux (**2**) de révolution transparent ou translucide délimité par une face interne (**4**) et une face externe (**5**), présentant un axe de révolution selon un axe vertical (**z**), le procédé consistant :
- à illuminer le corps creux (**2**) selon un coté par une source lumineuse (**9**) afin que des rayons lumineux incidents (**Ii**) traversent le corps creux (**2**) selon au moins une section transversale perpendiculaire à l'axe de révolution et dans laquelle le diamètre interne est à mesurer selon un axe de mesure (**x**), la source lumineuse (**9**) présentant deux frontières lumineuses (**9₁**, **9₂**) distantes selon l'axe de mesure (**x**),
- à récupérer depuis le côté du corps creux opposé à celui illuminé, selon un axe optique (**y**) perpendiculaire à l'axe vertical (**z**) et perpendiculaire à l'axe de mesure (**x**), les rayons lumineux réfléchis et réfractés par le corps creux (**2**) pour former au moins une image (**J**) dans laquelle apparaissent des transitions lumineuses (**T₁**, **T₂**),
- et à traiter l'image (**J**) afin de déterminer la mesure du diamètre interne du corps creux,
**caractérisé en ce qu'**il consiste :
- à illuminer le corps creux (**2**) par une source lumineuse diffuse et étendue (**9**) dont les frontières lumineuses (**9₁**, **9₂**) prises de part et d'autre de l'axe optique (**y**) créent dans l'image, deux transitions lumineuses (**T**₁, **T**₂) distantes l'une de l'autre et diamétralement opposées par rapport à l'axe vertical (**z**), correspondant aux rayons lumineux émergents dont le prolongement est tangent à la face interne (**4**) et perpendiculaire au diamètre, ces frontières lumineuses **(9₁, 9₂**) étant strictement comprises selon l'axe de mesure (**x**) entre la position d'un rayon lumineux incident limite interne **(I₃)** et la position d'un rayon lumineux incident limite externe (**I₄**), le rayon lumineux incident limite interne **(I₃)** engendrant le rayon lumineux émergent (**E₃**) uniquement réfracté lors de la traversée du corps creux et situé le plus loin de l'axe optique (**y**) tandis que le rayon lumineux incident limite externe (**I₄**) engendre le rayon lumineux émergent (**E₄**) réfléchi par la face interne (**4**) du corps creux, qui est le plus proche de l'axe optique,
- à traiter l'image afin de déterminer la distance selon l'axe de mesure (x), entre les deux transitions lumineuses (**T1**, **T2**) en vue de déterminer la mesure du diamètre interne du corps creux.

2. - Procédé de mesure selon la revendication 1, **caractérisé en ce qu'**il consiste à illuminer une région du corps creux (**2**) s'étendant selon une hauteur déterminée prise selon l'axe vertical (**z**), à récupérer les rayons lumineux émergents réfléchis et réfractés afin de former une image du corps creux selon ladite hauteur, et à déterminer à différents niveaux de l'axe vertical (**z**), la distance entre deux transitions lumineuses (**T1**, **T**₂) selon l'axe de mesure (**x**), afin de déterminer les mesures du diamètre interne à différentes hauteurs du corps creux (**2**).

3. - Procédé selon la revendication 1 ou 2, **caractérisé en ce qu'**il consiste à faire tourner le corps creux (**2**) autour de lui-même selon l'axe de révolution, selon au moins un demi-tour et à traiter les images pour différentes positions angulaires de rotation de l'objet creux dans chacune desquelles est réalisée la mesure du diamètre interne selon une ou plusieurs hauteurs.

4. - Procédé selon la revendication 2 ou 3, **caractérisé en ce qu'**il consiste à partir des mesures du diamètre interne réalisées à différentes hauteurs, à déterminer le profil de la face interne (**4**).

5. - Procédé selon l'une des revendications 1 à 4, **caractérisé en ce qu'**il consiste à comparer les mesures du diamètre interne à des valeurs de référence afin de déterminer si le corps creux (**2**) est défectueux ou non.

6. - Procédé selon la revendication 1, **caractérisé en ce qu'**il consiste à illuminer le corps creux (**2**) par une source (**9**) lumineuse de son centre jusqu'à ses frontières lumineuses (**9₁**, **9₂**).

7. - Procédé selon la revendication 1, **caractérisé en ce qu'**il consiste à illuminer le corps creux (**2**) par une source lumineuse (**9**) s'étendant depuis les deux frontières lumineuses (**9₁**, **9₂**) prises de part et d'autre de l'axe (**z**) au-delà des rayons lumineux incidents limites externes (**I₄**).

8. - Appareil pour mesurer le diamètre interne d'un corps creux (**2**) de révolution transparent ou translucide délimité par une face interne (**4**) et une face externe (**5**), présentant un axe de révolution selon un axe vertical (**z**), l'appareil comportant :
- une source lumineuse (**9**) adaptée pour émettre des rayons lumineux illuminant le corps creux (**2**) et disposée afin que les rayons lumineux incidents traversent le corps creux (**2**) depuis un côté et selon au moins une section transversale perpendiculaire à l'axe de révolution et dans laquelle le diamètre interne est à mesurer selon un axe de mesure (**x**),
- un système de récupération (**11**), selon un axe optique (**y**) perpendiculaire à l'axe vertical (**z**) et perpendiculaire à l'axe de mesure (**x**), des rayons lumineux émergents (**Ei**) réfléchis et réfractés par l'objet creux depuis le côté opposé de celui illuminé par la source, le système formant au moins une image (**J**) dans laquelle apparaissent des transitions lumineuses (**T₁**, **T₂**) distantes l'une de l'autre, diamétralement opposées par rapport à l'axe vertical (**z**),
- et une unité (**15**) d'acquisition et de traitement des images formées par le système de récupération (**11**) en vue de déterminer la mesure du diamètre interne du corps creux,
**caractérisé en ce que** la source lumineuse (**9**) est diffuse et étendue et présente deux frontières lumineuses (**9₁**, **9₂**) distantes selon l'axe de mesure (**x**) de manière à créer dans l'image, deux transitions lumineuses (**T1**, **T₂**) distantes l'une de l'autre et diamétralement opposées par rapport à l'axe vertical (**z**), correspondant aux rayons lumineux émergents dont le prolongement est tangent à la face interne (**4**) et perpendiculaire au diamètre, les frontières lumineuses (**9₁**, **9₂**) de la source lumineuse (**9**) prises de part et d'autre de l'axe optique (**y**) étant strictement comprises selon l'axe de mesure (**x**) entre la position d'un rayon lumineux incident limite interne (**I₃**) et la position d'un rayon lumineux incident limite externe (**I₄**), le rayon lumineux incident limite interne **(I₃)** engendrant le rayon lumineux émergent (**E₃**) uniquement réfracté lors de la traversée du corps creux (**2**) et situé le plus loin de l'axe optique (**y**) tandis que le rayon lumineux incident limite externe (**I₄**) engendre le rayon lumineux émergent (**E₄**) réfléchi par la face interne (4) du corps creux (2), qui est le plus proche de l'axe optique (**y**), et **en ce que** l'unité d'acquisition et de traitement des images (**15**) est adaptée pour traiter les images afin de déterminer la distance selon l'axe de mesure (x), entre les deux transitions lumineuses (**T₁**, **T₂**) en vue de déterminer la mesure du diamètre interne du corps creux.

9. - Appareil selon la revendication 8, **caractérisé en ce que** la source lumineuse diffuse et étendue (**9**) possède une hauteur déterminée (**Z_{L}**) prise selon l'axe vertical (**z**), pour illuminer une région verticale du corps creux, le système de récupération (**11**) récupère les rayons lumineux émergents réfléchis et réfractés par le corps creux selon une région verticale (**Z**_{L}) afin de former une image correspondante, l'unité de traitement des images détermine, à différents niveaux de l'axe vertical (**z**), la distance entre deux transitions lumineuses (**T₁**, **T₂**) selon l'axe de mesure (**x**), afin de déterminer les mesures du diamètre interne à différentes hauteurs du corps creux (**2**).

10. - Appareil selon la revendication 8 ou 9, **caractérisé en ce qu'**il comporte un système de mise en rotation sur lui-même autour de l'axe de révolution (**3**) du corps creux (**2**).

11. - Appareil selon la revendication 8, **caractérisé en ce que** la source (**9**) est lumineuse de son centre jusqu'à ses frontières lumineuses (**9₁**, **9₂**) formant ses bords verticaux.

12. - Appareil selon l'une des revendications 8 à 11, **caractérisé en ce que** les frontières lumineuses (**9₁,9₂**) de la source lumineuse sont rectilignes ou non, avec un profil adapté au profil du diamètre interne du corps creux (**2**).

13. - Appareil selon l'une des revendications 8 à 12, **caractérisé en ce que** la source lumineuse (**9**) comporte un système de réglage permettant de faire varier la distance entre les frontières lumineuses (**9₁,9₂**).

14. - Appareil selon la revendication 13, **caractérisé en ce qu'**il comporte en tant que système de réglage, un ou plusieurs masques pour la source lumineuse (**9**), ou une source lumineuse (**9**) réalisée par une série de diodes électroluminescentes pilotées en allumage et extinction.

15. - Appareil selon l'une des revendications 8 à 14, **caractérisé en ce que** le système de récupération (**11**) comporte une caméra (**12**) munie d'un objectif télécentrique (**13**) de manière que les rayons lumineux émergents (**Eᵢ**) collectés soient parallèles à l'axe optique (**y**) du système de récupération (**11**).

## Patentansprüche

1. Verfahren zum Messen des Innendurchmessers eines transparenten oder transluzenten Rotationshohlkörpers (2), der durch eine Innenseite (4) und eine Außenseite (5) begrenzt ist, der eine Rotationsachse um eine vertikale Achse (z) aufweist, wobei das Verfahren darin besteht:
- den Hohlkörper (2) entlang einer Seite mit einer Lichtquelle (9) zu beleuchten, damit einfallende Lichtstrahlen (li) den Hohlkörper (2) entlang wenigstens eines Querschnitts, der zu der Rotationsachse senkrecht verläuft und in dem der Innendurchmesser entlang einer Messachse (x) zu messen ist, durchqueren, wobei die Lichtquelle (9) zwei Lichtgrenzen (9₁, 9₂) aufweist, die entlang der Messachse (x) beabstandet sind,
- von der Seite des Hohlkörpers aus, welche der beleuchteten gegenüberliegt, entlang der optischen Achse (y) senkrecht zu der vertikalen Achse (z) und senkrecht zu der Messachse (x), die durch den Hohlkörper (2) reflektierten und gebrochenen Lichtstrahlen aufzufangen, um wenigstens ein Bild (J) zu bilden, in dem Lichtübergänge (T₁, T₂) erscheinen, und
- das Bild (J) zu verarbeiten, um das Maß des Innendurchmessers des Hohlkörpers zu bestimmen,
**dadurch gekennzeichnet, dass** es darin besteht:
- den Hohlkörper (2) mit einer diffusen und ausgedehnten Lichtquelle (9) zu beleuchten, deren Lichtgrenzen (9₁, 9₂) auf beiden Seiten der optischen Achse (y) in dem Bild zwei voneinander beabstandete und in Bezug auf die vertikale Achse (z) diametral gegenüberliegende Lichtübergänge (T₁, T₂) erzeugen, die den ausfallenden Lichtstrahlen entsprechen, deren Verlängerung zu der Innenseite (4) tangential ist und zu dem Durchmesser senkrecht verläuft, wobei diese Lichtgrenzen (9₁, 9₂) streng entlang der Messachse (x) zwischen der Position eines einfallenden Innengrenzlichtstrahls (I₃) und der Position eines einfallenden Außengrenzlichtstrahls (I₄) enthalten sind, wobei der einfallende Innengrenzlichtstrahl (I₃) den ausfallenden Lichtstrahl (E₃) erzeugt, der lediglich beim Durchqueren des Hohlkörpers gebrochen wird und von der optischen Achse (y) am weitesten entfernt ist, während der einfallende Außengrenzlichtstrahl (I₄) den durch die Innenseite (4) des Hohlkörpers reflektierten ausfallenden Lichtstrahl (E₄) erzeugt, der der optischen Achse am nächsten gelegen ist,
- das Bild zu verarbeiten, um den Abstand entlang der Messachse (x) zwischen den beiden Lichtübergängen (T₁, T₂) zu bestimmen, um das Maß des Innendurchmessers des Hohlkörpers zu bestimmen.

2. Messverfahren nach Anspruch 1, **dadurch gekennzeichnet, dass** es darin besteht, einen Bereich des Hohlkörpers (2) zu beleuchten, der sich entlang einer bestimmten Höhe entlang der vertikalen Achse (z) erstreckt, die reflektierten und gebrochenen ausfallenden Lichtstrahlen aufzufangen, um ein Bild des Hohlkörpers entlang der Höhe zu bilden, und in verschiedenen Ebenen der vertikalen Achse (z) den Abstand zwischen zwei Lichtübergängen (T₁, T₂) entlang der Messachse (x) zu bestimmen, um die Maße des Innendurchmessers in unterschiedlichen Höhen des Hohlkörpers (2) zu bestimmen.

3. Verfahren nach Anspruch 1 oder 2, **dadurch gekennzeichnet, dass** es darin besteht, den Hohlkörper (2) um die Rotationsachse - wenigstens eine halbe Umdrehung - um sich selbst zu drehen und die Bilder für unterschiedliche Winkelrotationsstellungen des Hohlobjekts, in jeder von denen die Messung des Innendurchmessers in einer oder mehreren Höhe(n) durchgeführt wird, zu verarbeiten.

4. Verfahren nach Anspruch 2 oder 3, **dadurch gekennzeichnet, dass** es darin besteht, anhand der in unterschiedlichen Höhen durchgeführten Messungen des Innendurchmessers das Profil der Innenseite (4) zu bestimmen.

5. Verfahren nach einem der Ansprüche 1 bis 4, **dadurch gekennzeichnet, dass** es darin besteht, die Maße des Innendurchmessers mit Referenzwerten zu vergleichen, um zu bestimmen, ob der Hohlkörper (2) defekt ist oder nicht.

6. Verfahren nach Anspruch 1, **dadurch gekennzeichnet, dass** es darin besteht, den Hohlkörper (2) mit einer Quelle (9), die von ihrer Mitte bis zu ihren Lichtgrenzen (9₁, 9**₂**) leuchtend ist, zu beleuchten.

7. Verfahren nach Anspruch 1, **dadurch gekennzeichnet, dass** es darin besteht, den Hohlkörper (2) mit einer Lichtquelle (9), die sich von den beiden Lichtgrenzen (9₁, 9₂) auf beiden Seiten der Achse (z) jenseits der einfallenden Außengrenzlichtstrahlen (I₄) aus erstreckt, zu beleuchten.

8. Vorrichtung zum Messen des Innendurchmessers eines transparenten oder transluzenten Rotationshohlkörpers (2), der durch eine Innenseite (4) und eine Außenseite (5) begrenzt ist, der eine Rotationsachse um eine vertikale Achse (z) aufweist, wobei die Vorrichtung umfasst:
- eine Lichtquelle (9), die dazu ausgelegt ist, Lichtstrahlen auszusenden, welche den Hohlkörper (2) beleuchten, und die angeordnet ist, damit die einfallenden Lichtstrahlen den Hohlkörper (2) von einer Seite aus und entlang wenigstens eines Querschnitts, der zu der Rotationsachse senkrecht verläuft und in dem der Innendurchmesser entlang einer Messachse (x) zu messen ist, durchqueren,
- ein System zum Auffangen (11) - entlang einer optischen Achse (y) senkrecht zu der vertikalen Achse (z) und senkrecht zu der Messachse (x) - der ausfallenden, durch das Hohlobjekt reflektierten und gebrochenen Lichtstrahlen (Eᵢ) von der Seite aus, die der von der Quelle beleuchteten gegenüberliegt, wobei das System wenigstens ein Bild (J) bildet, in dem voneinander beabstandete, in Bezug auf die vertikale Achse (z) diametral gegenüberliegende Lichtübergänge (T₁, T₂) erscheinen, und
- eine Einheit (15) zum Erfassen und Verarbeiten der durch das Auffangsystem (11) gebildeten Bilder, um das Maß des Innendurchmessers des Hohlkörpers zu bestimmen,
**dadurch gekennzeichnet, dass** die Lichtquelle (9) diffus und ausgedehnt ist und zwei Lichtgrenzen (9₁, 9₂) aufweist, die entlang der Messachse (x) beabstandet sind, um in dem Bild zwei voneinander beabstandete und in Bezug auf die vertikale Achse (z) diametral gegenüberliegende Lichtübergänge (T₁, T₂) zu erzeugen, die den ausfallenden Lichtstrahlen entsprechen, deren Verlängerung zu der Innenseite (4) tangential ist und zu dem Durchmesser senkrecht verläuft, wobei die Lichtgrenzen (9₁, 9₂) der Lichtquelle (9) auf beiden Seiten der optischen Achse (y) streng entlang der Messachse (x) zwischen der Position eines einfallenden Innengrenzlichtstrahls (I₃) und der Position eines einfallenden Außengrenzlichtstrahls (I₄) enthalten sind, wobei der einfallende Innengrenzlichtstrahl (I₃) den ausfallenden Lichtstrahl (E₃) erzeugt, der lediglich beim Durchqueren des Hohlkörpers (2) gebrochen wird und von der optischen Achse (y) am weitesten entfernt ist, während der einfallende Außengrenzlichtstrahl (I₄) den durch die Innenseite (4) des Hohlkörpers (2) reflektierten ausfallenden Lichtstrahl (E₄) erzeugt, der der optischen Achse (y) am nächsten gelegen ist, und dass die Einheit zum Erfassen und Verarbeiten der Bilder (15) dazu ausgelegt ist, die Bilder zu verarbeiten, um den Abstand entlang der Messachse (x) zwischen den beiden Lichtübergängen (T₁, T₂) zu bestimmen, um das Maß des Innendurchmessers des Hohlkörpers zu bestimmen.

9. Vorrichtung nach Anspruch 8, **dadurch gekennzeichnet, dass** die diffuse und ausgedehnte Lichtquelle (9) eine bestimmte Höhe (Z_{L}) entlang der vertikalen Achse (z) besitzt, um einen vertikalen Bereich des Hohlkörpers zu beleuchten, das Auffangsystem (11) die durch den Hohlkörper reflektierten und gebrochenen ausfallenden Lichtstrahlen entlang eines vertikalen Bereichs (Z_{L}) auffängt, um ein entsprechendes Bild zu bilden, die Einheit zum Verarbeiten der Bilder in unterschiedlichen Ebenen der vertikalen Achse (z) den Abstand zwischen zwei Lichtübergängen (T₁, T₂) entlang der Messachse (x) bestimmt, um die Maße des Innendurchmessers in unterschiedlichen Höhen des Hohlkörpers (2) zu bestimmen.

10. Vorrichtung nach Anspruch 8 oder 9, **dadurch gekennzeichnet, dass** sie ein System umfasst, um den Hohlkörper (2) um die Rotationsachse (3) um sich selbst in Rotation zu versetzen.

11. Vorrichtung nach Anspruch 8, **dadurch gekennzeichnet, dass** die Quelle (9) von ihrer Mitte bis zu ihren Lichtgrenzen (9₁, 9₂), die ihre vertikalen Ränder bilden, leuchtend ist.

12. Vorrichtung nach einem der Ansprüche 8 bis 11, **dadurch gekennzeichnet, dass** die Lichtgrenzen (9₁, 9₂) der Lichtquelle geradlinig oder nicht geradlinig sind, mit einem Profil, das dem Profil des Innendurchmessers des Hohlkörpers (2) angepasst ist.

13. Vorrichtung nach einem der Ansprüche 8 bis 12, **dadurch gekennzeichnet, dass** die Lichtquelle (9) ein Einstellsystem umfasst, das ermöglicht, den Abstand zwischen den Lichtgrenzen (9₁, 9₂) zu variieren.

14. Vorrichtung nach Anspruch 13, **dadurch gekennzeichnet, dass** sie als Einstellsystem eine oder mehrere Masken für die Lichtquelle (9) oder eine Lichtquelle (9), die durch eine Reihe von einschalt- und ausschaltgesteuerten Leuchtdioden ausgebildet ist, umfasst.

15. Vorrichtung nach einem der Ansprüche 8 bis 14, **dadurch gekennzeichnet, dass** das Auffangsystem (11) eine Kamera (12) umfasst, die mit einem telezentrischen Objektiv (13) ausgestattet ist, so dass die gesammelten ausfallenden Lichtstrahlen (Eᵢ) zu der optischen Achse (y) des Auffangsystems (11) parallel verlaufen.

## Claims

1. A method of measuring the inside diameter of a hollow body of revolution (2) that is transparent or translucent and that is defined by an inside face (4) and an outside face (5), the body presenting an axis of revolution along a vertical axis (z), the method consisting in:
- illuminating the hollow body (2) on one side by means of a light source (9) so that the incident light rays (Ii) pass through the hollow body (2) along at least one cross-section perpendicular to the axis of revolution and in which the inside diameter is to be measured along a measurement axis (x), the light source (9) presenting two light boundaries (9₁, 9₂) spaced apart along the measurement axis (x);
- from the side of the hollow body that is opposite from its illuminated side, and by acting along an optical axis (y) that is perpendicular to the vertical axis (z) and perpendicular to the measurement axis (x), recovering the light rays that are reflected and refracted by the hollow body (2) so as to form at least one image (J) in which there appear light transitions (T1, T2); and
- processing the image (J) so as to determine the measurement of the inside diameter of the hollow body,
the method being **characterized in that** it consists in:
- illuminating the hollow body (2) by means of a diffuse light source (9) having light boundaries (9₁, 9₂) on either side of the optical axis (y) created in the image, two light transitions (T₁, T₂) that are spaced apart from each other and diametrically opposite relative to the vertical axis (z), corresponding to emerging light rays that propagate along respective lines tangential to the inside face (4) and perpendicular to the diameter, said light boundaries (9₁, 9₂) lying along the measurement axis (x) strictly between the position of an internal limiting incident light ray (I₃) and the position of an external limiting incident light ray (I₄), the internal limiting incident light ray (I₃) generating the emerging light ray (E₃) that is only refracted on passing through the hollow body and that is situated farthest from the optical axis (y), while the external limiting incident light ray (I₄) generates the emerging light ray (E₄) that is reflected by the inside face (4) of the hollow body and that is the closest to the optical axis; and
- processing the image so as to determine the distance along the measurement axis (x) between the two light transitions (T₁, T₂) in order to determine the measurement for the inside diameter of the hollow body.

2. A measurement method according to claim 1, **characterized in that** it consists in illuminating a region of the hollow body (2) that extends over a determined height along the vertical axis (z), in recovering the reflected and refracted emerging light rays so as to form an image of the hollow body over said height, and in determining the distance along the measurement axis (x) between two light transitions (T₁, T₂) at different levels along the vertical axis (z) so as to determine measurements for the inside diameter at different heights of the hollow body (2).

3. A method according to claim 1 or claim 2, **characterized in that** it consists in causing the hollow body (2) to rotate about the axis of revolution through at least part of a revolution and in processing the images for different angular positions in rotation of the hollow item, with a measurement for the inside diameter at one or more heights being taken in each of those images.

4. A method according to claim 2 or claim 3, **characterized in that** it consists in determining the profile of the inside face (4) from measurements of the inside diameter taken at different heights.

5. A method according to any one of claims 1 to 4, **characterized in that** it consists in comparing the measurements of the inside diameter with reference values so as to determine whether the hollow body (2) is or is not defective.

6. A method according to claim 1, **characterized in that** it consists in illuminating the hollow body (2) by a light source (9) that emits light from its center and up to its light boundaries (9₁, 9₂).

7. A method according to claim 1, **characterized in that** it consists in illuminating the hollow body (2) by a light source (9) that extends from the two light boundaries (9₁, 9₂) on either side of the axis (z) and beyond the external incident light ray (I₄).

8. An appliance for measuring the inside diameter of a hollow body of revolution (2) that is transparent or translucent and that is defined by an inside face (4) and an outside face (5), the body presenting an axis of revolution along a vertical axis (z), the appliance being **characterized in that** it comprises:
- a light source (9) emitting light rays illuminating the hollow body (2) and arranged so that the incident light rays pass through the hollow body (2) from one side and along at least one cross-section perpendicular to the axis of revolution and in which the inside diameter is to be measured along a measurement axis (x);
- on the side of the hollow item opposite from its side illuminated by the source, a recovery system (11) for acting along an optical axis (y) that is perpendicular to the vertical axis (z) and perpendicular to the measurement axis (x) to recover emerging light rays (Ei) as reflected and refracted by the hollow item, the system forming at least one image (J) in which there appear light transitions (T₁, T₂) that are spaced apart from each other and diametrically opposite relative to the vertical axis (z); and
- an image acquisition and processor unit (15) formed by the recovery system (11) in order to determine the measurement for the inside diameter of the hollow body;
the appliance being **characterized in that** the light source (9) is diffuse and extensive and presents two light boundaries (9₁, 9₂) that are spaced apart along the mesurement axis (x) so as to create two light transitions (T₁, T₂) in the image, which light transitions are spaced apart from each other and diametrically opposite relative to the vertical axis (z), corresponding to emerging light rays that propagate along respective lines tangential to the inside face (4) and perpendicular to the diameter, the light boundaries (9₁, 9₂) of the light source (9) on either side of the optical axis (y) lying along the measurement axis (x) strictly between the position of an internal limiting incident light ray (I₃) and the position of an external limiting incident light ray (I₄), the internal limiting incident light ray (I₃) generating the emerging light ray (E₃) that is only refracted on passing through the hollow body (2) and that is situated farthest from the optical axis (y), while the external limiting incident light ray (I₄) generates the emerging light ray (E₄) that is reflected by the inside face (4) of the hollow body (2) and that is the closest to the optical axis (y), and **in that** the image acquisition and processor unit (15) processes the images so as to determine the distance along the measurement axis (x), between the two light transitions (T₁, T₂) in order to determine the measurement for the inside diameter of the hollow body.

9. An appliance according to claim 8, **characterized in that** the diffuse and extensive light source (9) possesses a determined height (Z_{L}) along the vertical axis (z) for illuminating a vertical region of the hollow body, the recovery system (11) recovers the emerging light rays reflected and refracted by the hollow body in a vertical region (Z_{L}) so as to form a corresponding image, and the image processor unit determines the distance between two light transitions (T₁, T₂) along the measurement axis (x) at different levels along the vertical axis (z) so as to determine measurements for the inside diameter at different heights of the hollow body (2).

10. An appliance according to claim 8 or claim 9, **characterized in that** it includes a system for causing the hollow body (2) to rotate about the axis of revolution (3).

11. An appliance according to claim 8, **characterized in that** the source (9) is luminous from its center out to its light boundaries (9₁, 9₂) forming its vertical edges.

12. An appliance according to any one of claims 8 to 11, **characterized in that** the light boundaries (9₁, 9₂) of the light source are optionally rectilinear with a profile that is adapted to the profile of the inside diameter of the hollow body (2).

13. An appliance according to any one of claims 8 to 12, **characterized in that** the light source (9) includes an adjustment system serving to vary the distance between the light boundaries (9₁, 9₂).

14. An appliance according to claim 13, **characterized in that**, as its adjustment system, it includes one or more masks for the light source (9), or a light source (9) made using a series of light-emitting diodes with on/off control.

15. An appliance according to any one of claims 8 to 14, **characterized in that** the recovery system (11) comprises a camera (12) having a telecentric lens (13) so that the collected emerging light rays (Eᵢ) are parallel to the optical axis (y) of the recovery system (11).
